# EUROPEAN PATENT APPLICATION

(11) **EP 1 128 245 A2**
(43) Date of publication of application: **29.08.2001**
(21) Application number: 00128000.7
(22) Date of filing: 20.12.2000
(51) Int. Cl.: G05B 19/418

(54) **Information management system for manufacturing machines**

(30) Priority: 22.02.2000 JP 2000043970
(71) Applicant: MURATA KIKAI KABUSHIKI KAISHA, Kisshoin, Minami-ku Kyoto-shi 601 (JP)
(72) Inventor: Sekitani, Hiroyuki, Kani-shi, Gifu (JP)
(74) Representative: Liedl, Christine, Dipl.-Chem.

(57) **Abstract**

The invention relates to an information management system for manufacturing machines comprising a database devised to manage input and output as well as to memory individual machine information D, which is a body of information concerning each manufacturing machine as a product of a company. The individual machine information D stored in the database 1 includes parts books, drawings, and documents related to the manufacturing machine. Moreover, the individual machine information D covers all the information ranging from designing to procurement, production, wishes of the customers, and maintenance information. Addition and updating of the individual machine information is made possible form various locations (Fig. 1).

## Description

### Field of the Invention

The present invention relates to an information management system for manufacturing machines that provides unified management of all the information including parts books, drawings, and documents concerning a manufacturing machine such as a punch press or a lathe during all the processes involving the manufacturing machines including designing, production, operation, and maintenance.

### Background of the Invention

In companies producing manufacturing machines such as a punch press and a lathe, information related to every stage of the production of the manufacturing machines such as receipt of orders, designing, production, and maintenance, is managed independently in each of the departments corresponding respectively to each of the tasks described above.

When some problems arise, inquiries should be made with other departments.

However, information obtained from other departments sometimes does not serve the need as it is and requires interpretation to adjust it to the department. As a result, it is burdensome and complicated to handle information, and it takes long before the problem is solved.

It is thus an object of the present invention to provide an information management system for manufacturing machines that enables a unified management of the information including parts books, drawings and documents concerning a manufacturing machine all over the processes from designing to maintenance.

Another object of the present invention is to widen the range of information that is manageable under a unified management system by enabling input of data in remote locations, the data including wishes of clients that have been obtained during the operation of the manufacturing machine.

Still another object of the present invention is to maintain reliability of the managed information by eliminating chances of accidental over-writing, and to enhance usability of the information in every part related to a company ranging from customers to a sales department.

### Summary of the Invention

In order to accomplish the above-mentioned objects, the present invention provides an information management system for manufacturing machines having a database 1, which controls input and output as well as memory of an individual machine information D, which is a body of information concerning each manufacturing machine as a product of a company. The individual machine information D, which is stored in the database 1, includes parts books, drawings, and documents concerning said manufacturing machines, and encompasses information related to designing, procurement of materials, and production of said manufacturing machines, as well as wishes of the customers before designing, and in addition the maintenance information obtained after the initial operation. Said company has a plurality of departments 5∼9 wherein information processing means 4 are installed. Each of the information processing means 4 has an access means 12 that enables addition and updating of said individual information of said database 1.

With the information management system, information that arises in each of the company departments 5∼9 is added to or used to update the individual machine information D stored in the database 1 by accessing the database 1 by means of the information processing means 4. Moreover, the individual machine information D stored in the database 1 can be read through the information processing means 4 in each department 5∼9. As a result, the information including parts books, drawings, documents and the like arising all over the processes ranging from receipt of order, designing, production, installment on site, and operation to maintenance can be unified and managed in the database 1.

The "database" mentioned herein comprises a database main body 2, which is a body of information, and a database management system, which manages input and output of the information stored in the database main body 2. The database 1 does not have to be made up of a physically single information processing means, but may take the form of a distributed database system and the like wherein a plurality of information processing means installed in remote locations can handle the database, under the condition that every user can read the information as a single database.

In the present invention, said database 1 may be connected to said information processing means 4 of each department 5∼9 and said information processing means 4 of the customers either through a network or through access means installed in the information processing means 4 of said customers that enables addition and updating of the individual machine information D stored in said database 1.

In this way, connecting the database 1 to the information processing means 4 of each company department 5∼9 and the customers enables access to the database 1 from even a remote location. As a result, the range of information manageable in a unified management system can be widened.

Said company departments 5∼9 may include, for example, a sales department 5, a technical department 6, a procurement department 7, production department 8, and a maintenance department 9. The database 1 may have an access-restricting function that limits addition and updating of information in the individual machine information D depending on the departments 5∼9 and the customers 10, 11.

Limiting the updating and addition depending on the departments 5~9 prevents errors such as a mistaken updating by each of the departments 5∼9 in the individual machine information D in the database 1. As a result, the reliability of information can be maintained, and higher usability is attained because of the prevention of mishandling. Further, the database 1 may have an access-limiting function that conceals some part of the information stored in the individual machine information D depending on the each department 5~9 and the customers 10, 11.

### Brief Description of the Drawing

Figure 1 is a block diagram to show the basic concept of an information management system embodying the present invention.

Figure 2 is an illustrative diagram of the hardware thereof.

### Detailed Description of the preferred Embodiments

Preferred embodiments of the present invention will now be explained in detail with reference to the accompanying drawings.

An information management system for manufacturing machines according to one embodiment of the present invention incorporates a database 1 that stores individual machine information D and also manages input and output of the individual machine information D. An access means 12 is installed in each of the information processing means 4 of a plurality of departments 5∼9 within a company and each of the information processing means 4 of customers 10,11. Said manufacturing machines may mean general machines that manufacture things such as machine tools including a lathe and a machining center, work sheet processing machines such as a punch press and a laser cutting machine, assemblers and others.

The individual machine data D is a set of information handled as a unit and is installed in each manufacturing machine. A manufacturing machine may mean an individual machine and may also be a combination of machines assembled to perform production as a unit.

The individual machine information D includes parts books, drawings, and documents concerning manufacturing machines, and also covers information concerning design, procurement, and production, as well as information of customers' wishes obtained before the designing of the manufacturing machine in addition to the information obtained during the maintenance after the start of the operation. The parts books describe lists of parts that compose the manufacturing machine, and specifications of the parts. The information concerning designing, material procurement, production, the wishes of the customers, and the maintenance can be in any form such as parts books, drawings, and documents or visuals.

The individual machine information D is stored in the database 1 in such a format that enables easy extraction, for example by bundling the information by the customer.

The database 1 is composed of a database main body 2 and a database management system 3. The database main body 2 stores each piece of information in predetermined data structure in a storage medium. The database management system 3 manages input and output of the information of the database main body 2 and comprises an information processing means such as a computer, and a program that controls it. The database 1 is not necessarily composed of one physically individual processing means. It may take the form of a distributed database, which can be processed by a plurality of information processing means installed far away from each other, under the condition that users can see the same single database. In addition, the database 1 maybe constructed as a relational database, for example.

Said departments 5∼9 of the company include a sales department 5, a technical department 6, a procurement department 7, a production department 8, and a maintenance department 9. The sales department 5 is a department for marketing and receiving orders. The technical department 6 makes plans and draw up designs of manufacturing machines. The procurement department 7 is in charge of procurement of materials for manufacturing machines (including parts). The production department 8 is a department producing the manufacturing machines. The maintenance department 9 performs maintenance and checking for the manufacturing machines for the customers.

The information process means 4 of each department 5 ∼9 are means for processing information such as general computers, personal computers, mobile terminals, and the like, which are capable of sending and receiving information. Although the figure shows one information processing means 4 for each of the departments 5∼9, generally speaking, each of the departments 5∼9 has several units of the information processing means 4. The information processing means 4 has the access means 12 that enables access to the database 1, so that it works as a terminal for the database 1. The access means 12 comprises a program for enabling access to the database 1 with the use of the hardware of the information processing means 4 .

The customers 10, 11 include companies that use the manufacturing machines including not only companies wherein the manufacturing machines are installed, but also customers that are in the process of placing orders and also customers that have yet to consider purchasing. The information processing means 4 of the customers 10, 11 are also computers or mobile terminals, and have the access means 12 capable of accessing the database 1.

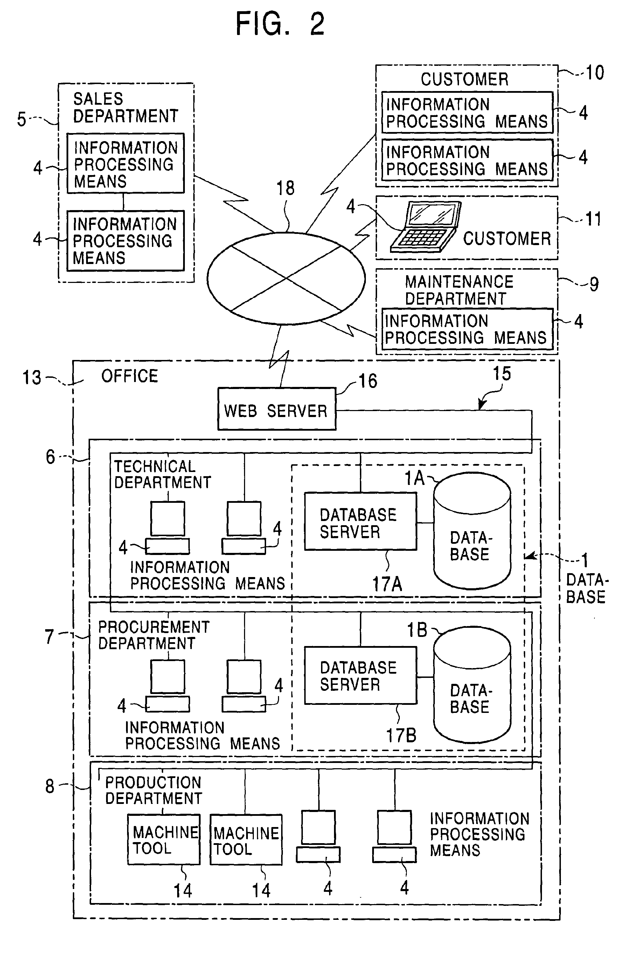

Figure 2 shows a basic concept of the combination of hardware in the information management system embodying the present invention. One office 13 houses the technical department 6, the procurement department 7, and the production department 8. Each of the departments 6∼8 has a plurality of information processing means 4. These information processing means 4 of each department 6∼8 are connected with each other via a local area network (LAN) 15 within the office 13. The LAN 15 is connected with a wide area network (WAN) 18 outside the office 13 via a web server 16. The production department 8 has machine tools 14, the control units of which are also connected with the LAN 15, so that they are also parts of information processing means with access to the database 1.

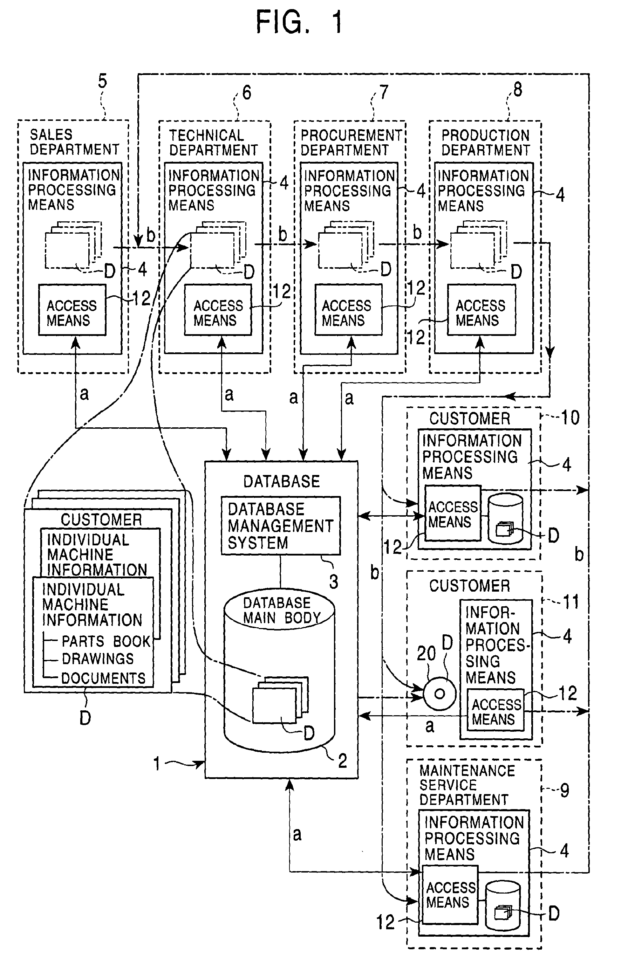

The database 1 is a distributed database composed of a plurality of databases 1A, 1B. Each of the databases 1A, 1B is connected to the LAN 15 through corresponding database servers 17A, 17B. In the example shown in Figure 2, as an example, the technical department 6 and the procurement department 7 have databases 1A, 1B respectively. Each of the databases 1A, 1B can be used not only individually but also as the database 1 that handles the individual data D shown in Figure 1 via the database servers 17A, 17B . The database servers 17A, 17B are composed of computers performing distributed processing. In the example shown in the same figure, the database 1 is installed within the same LAN 15. However, it is also acceptable to build a distributed database system composed of a plurality of databases (not shown in the drawings) through the WAN 18. The database 1 may serve the function of limiting access depending on each of the departments 5∼9 and the customers 10, 11 in terms of addition and updating of the information in the individual machine information D. Further, not only limiting addition and updating, but also reading out of the information may be limited by the database 1, so that limited information of the individual machine information D can be read out.

The WAN 18 is composed of telephone lines such as private telephone lines and public telephone lines. A network having a limited area or the Internet either can serve as the WAN 18.

The sales department 5 is housed in a separate office from said office 13, and has a plurality of information processing means 4. Each of the information processing means 4 of the sales department office 5 is connected to a LAN and through the web server (not shown in the drawings) connected to said WAN 18. The sales department 5 is shown in the figure as a single office, but may have a plurality of offices. Each of the information processing means 4 of the sales department 5 is either through the LAN or directly to the WAN 18.

The maintenance department 9, like the sales department 5, is housed in a separate office from said office 13, and has a plurality of information processing means 4. Each of the information processing means 4 (the figure shows only one unit) is connected to the LAN and through the web server (not shown in the drawings) to said WAN 18. The maintenance department 5 is shown as a single office, but may have a plurality of offices. Each of the information processing means 4 of the maintenance department 5 is connected either through the LAN or directly to the WAN 18.

The sales department 5 and the maintenance department 9 may be within the office 13 together with the technical department 6 and others. The information processing means 4 of each of the departments 5∼9 may be a terminal without connection to the LAN, for example a notebook PC, which will have access to the database 1 through the WAN 18.

Each of the customers 10, 11, whose information processing means 4 are connected to the WAN 18, has access to the database 1 through the WAN 18. The information processing means 4 of each of the customers 10, 11 can either be a part of a network or be used independently.

Next, the process of making and using the individual machine information D will be explained.

In Figure 1, the individual machine information D, shown by double-dotted chain line, indicates the individual machine information D that is read-out by each of the information processing means 4. The solid line (a) shows actual flow of the information, and the chain line (b) shows the transition phase of the individual machine information D.

When the sales department 5 places an order for a manufacturing machine, a new individual machine information D is made in the database 1 by accessing the database 1 through the access means 12 of the information processing means 4 of the department. At this stage, the data structure of the new individual machine information D is already set, but there is little input information yet. The sales department 5 inputs such information obtained at the time of order receipt as the type, model, specifications, price, and delivery date of the manufacturing machine into the individual machine information D of the database 1. The information the sales department 5 inputs is mainly in the form of document.

The technical department 6 accesses the database 1 through the information processing means 4 and draws up the design of the manufacturing machine based on the individual machine information D into which the sales department 5 has input the information. The parts books, drawings, and other related information put together by the technical department 6 are input into the individual machine information D of the database 1 through the information processing means 4.

The procurement department 7 accesses the database 1 through the information processing means 4, reads the individual machine information D, and procures parts and other materials based on the information obtained from the parts books thereof. Information related to the procured parts is input into the individual machine information D of the database 1. The production department 8 produces the manufacturing machine based on the individual machine information D prepared and updated in the database 1. The produced manufacturing machine goes through various adjustment and testing, the results of which are additionally input into the individual machine information D of the database 1 in the form of documents or in other information formats.

The production department 8 or the maintenance department 9 installs the manufacturing machine on the customer's site. At the time of installing, various adjustment is done on the machine, and the information of such adjustment is additionally input into the individual machine information D of the database 1 together with the information related to the environment of the installation site. Such input is done by the one of the departments 8, 9 that installed the machine, and through the information processing means 4.

The customers 10, 11 for whom the machine is installed receive all or a certain part of the information in the individual machine information D of the database 1. The individual machine information D can be transferred either by accessing the database 1 through the access means 12 of the information processing means 4 of the customers 10, 11 or by a movable memory medium 20 such as a CD-ROM.

The customers 10, 11, who use the manufacturing machine, additionally input into the individual machine information D the information gained during the operation of the manufacturing machine including information concerning defects and wishes. The additional input is done by accessing the database 1 through the information processing means 4.

The new information ,which is gained by the customers 10, 11 and the maintenance department 9, is added to or updates the individual machine information D of the database 1, and further made use of by the technical department 6 for the design of a new manufacturing machine.

The information management system for manufacturing machines provides a unified management based on the database, managing the information generated in all the procedures from the receipt of order, designing , production, installment, operation, and maintenance including parts books, drawings, documents and others. As a result, when various kinds of problems arise, for example, if the procurement department 7 finds that parts used in the design drawn by the technical department 6 are difficult to procure, or if the production department 4 finds some defects while producing the machine and design change is made necessary, these problems can be solved promptly. Each of the departments can understand the wishes of the customers 10,11 and can reflect such wished on the next designing process and so forth, leading to improved designing and production of manufacturing machines.

The information management system for manufacturing machines of the present invention has a database that manages storage and input and output of individual machine information, which is a body of information concerning manufacturing machines or products of the company, wherein said individual machine information includes information concerning said manufacturing machines in every process ranging from designing, procurement, and production to customers' wishes before the actual designing, and also maintenance information after the operation including parts books, drawings and documents concerning the manufacturing machine. The information management system further includes access means to enable addition and updating of the individual machine information in the database, so that unified management of the information concerning the manufacturing machine from designing to maintenance, including parts books, drawings, and documents.

Said database is connected to each information processing means of each of the departments and of the customers via a network. If said information processing means of the customers have an access means that enables addition and updating of information such as the customers' wishes gained after the actual operation of the machines, input of such information from a remote location is made possible, resulting in an expanded range of information manageable under a unified management system.

When the company has a sales department, technical department, procurement department, production department, and maintenance service department, if said database has an access-restricting function that limits the addition and updating of the information in the individual machine information depending on each of the above-mentioned departments and on each of the customers, the database is improved in usability for all the parties concerned from the sales department to the customers, because the managed information is prevented from accidental over-writing and increasingly reliable.

## Claims

1. An information management system for manufacturing machines comprising; a database that manages input and output in addition to memory of individual machine information, which is a body of information concerning each manufacturing machine as products of a company, said individual machine information including parts books, drawings and documents that cover designing, procurement and production, as well as wishes of customers obtained before designing in addition to maintenance information; an information processing means for each of said company departments; and an access means that is installed in each of said information processing means which is capable of performing addition and updating of said individual machine information.

2. An information management system as in claim 1, wherein said database is connected to said information processing means of said departments and said customers via a network, information processing means of said customers having an access means that is capable of performing addition and updating the individual machine information of said database.

3. An information management system as in claim 2, wherein said company departments include a sales department, a technical department, a procurement department, a production department, and a maintenance service department, with said database having an access limiting function that limits addition and updating of information in said individual machine information depending on said departments and said customers.
